Europäisches Patentamt

European Patent Office

Office européen des brevets

(11) Publication number: **0 392 719**
**A2**

# EUROPEAN PATENT APPLICATION

(21) Application number: **90303526.9**

(51) Int. Cl.⁵: **G02B 6/42, G02B 6/32**

(22) Date of filing: **02.04.90**

(30) Priority: **08.04.89 GB 8907958**

(43) Date of publication of application:
**17.10.90 Bulletin 90/42**

(84) Designated Contracting States:
**DE FR GB IT NL SE**

(71) Applicant: **PLESSEY OVERSEAS LIMITED**
**Vicarage Lane**
**Ilford Essex IG1 4AQ(GB)**

(72) Inventor: **Randle, Frederick Arthur**
**11 Willows Hill**
**Bradden, Nr. Towcester, Northants(GB)**
Inventor: **The other inventor has agreed to**
**waive his entitlement to designation**

(74) Representative: **Lupton, Frederick**
**The General Electric Company, p.l.c., Central**
**Patent Department, Hirst Research Centre**
**Wembley, Middlesex, HA9 7PP(GB)**

(54) Optical coupling arrangements.

(57) A method of aligned optical coupling and an optical coupling arrangement for facilitating light coupling between light elements (1, 15, 21) using an image surface (11). The image surface 11 being arranged to define a surface, or possibly a focal plane, upon which a light beam (3) is projected and to allow light element (15) to be arranged with respect to it so that the light beam (3) is coupled to that element (15). The image surface (11) being formed upon a tangible image element relative to which adjustment can be made to the light elements (1, 15, 21, 35)

# OPTICAL COUPLING ARRANGEMENTS

The present invention relates to optical coupling arrangements.

To provide effective optical coupling arrangements between light sources and associated light conducting means such as optical fibres and waveguides it is necessary to make large numbers of optical alignments. Consequently, it is preferable that optical coupling arrangements are both cheap and simple to provide.

More specifically, in order to achieve satisfactory optical coupling between a light source and light conductive components, the light source must be aligned in all six dimensions with respect to a recipient optical component for example an optical fibre. Conventional optical coupling arrangements for achieving the requisite alignment involves the accurate manufacture of optical coupling packages to establish a "fixed positional relationship" between the light source and the light components which reduces the required number of dimensions to four but such controlled packaging is expensive. Other known alignment methods of achieving optical coupling include lenses to allow "steering" of a subject light beam but again these methods require high tolerance packaging and complex fabrication procedures which make them expensive.

According to the present invention there is provided a method of optical alignment between light elements using light focus means and an image surface, the method comprising:-

(i) projection of a light beam from a first light element through the light focus means to be incident upon the image surface;

(ii) adjustment of the position of the image surface relative to the first light element such that the light beam is focussed upon a pre-determined area of that image surface; and,

(iii) arrangement of a second light element relative to the pre-determined area such that light is coupled through that area into the second light element.

Preferably, the image surface is secured relative to the first light element. The pre-determined area may be a point or the light beam expanded into a parallel beam.

Further in accordance with the present invention therefore there is provided an optical alignment device for a light element including light focus means for focusing light upon an image surface that is substantially fixed and so illuminate a pre-determined area of that image surface, the pre-determined area of the image surface being arranged to allow light to be coupled through it.

Preferably, the image surface is upon an image element and defines a focal plane of the focus means. The image element and focus means may be in intimate contact. The image element may be formed of any light transparent material such as glass and arranged to allow a light element to be secured to it. The focus means may focus light upon a point upon the image surface. The image surface may be roughened to allow focused light to be distinguished.

An embodiment of the present invention will now be described, by way of example only, with reference to the accompanying drawings, in which:-

Figure 1 illustrates, in schematic cross-section, an optical coupling device in accordance with the present invention;

Figures 2 to 6 illustrate, in schematic cross-section, a method of optical coupling in accordance with the present invention; and,

Figure 7 illustrates, in cross-section, the optical coupling device as illustrated in Figure 1, incorporated into an optical/electrical connector arrangement.

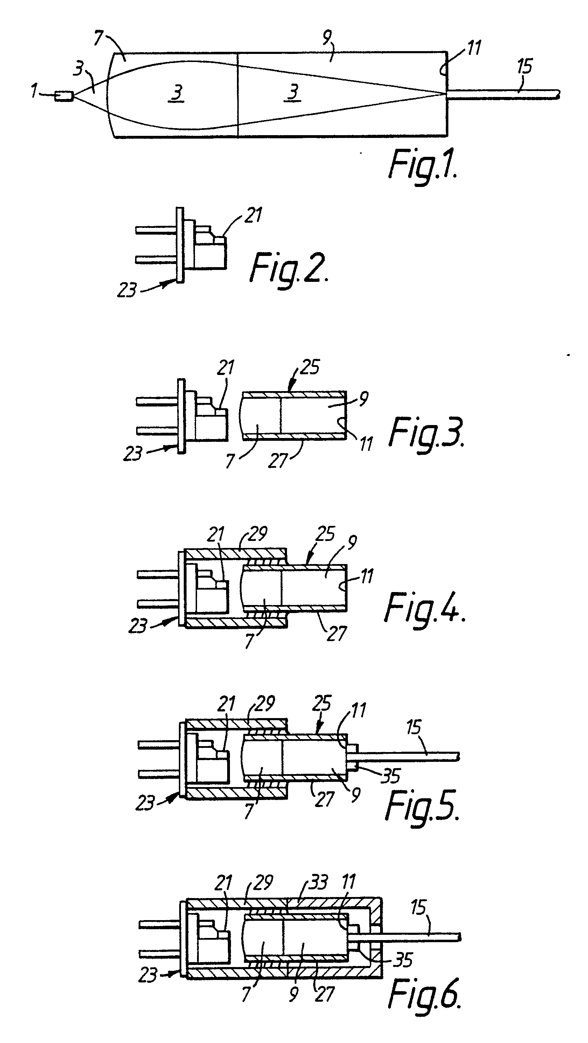

Considering Figure 1, a light source 1 is arranged to project a light beam 3 on to focus means 7. The focus means 7 acts upon the beam 3 and directs it into an imaging element 9. The beam 3 in the imaging element 9 is focussed upon an image surface 11. It will be appreciated that the image surface 11 is preferably flat, but the most important factor is that the image surface 11 is arranged to be substantially perpendicular to the beam 3 at the position of interaction. Thus, the image surface 11 may, alternatively be convex or concave. A light conductor 15 such as an optical fibre or waveguide is coupled or positioned relative to the image surface 11 to receive light. Furthermore, the conductor 15 may be moved transversely across the surface 11 in order to maximise the light received.

Although, Figure 1 illustrates the beam 3 as focussed on to a point of the image surface 11, it will be appreciated that the beam could be focussed upon a more diffuse area of the surface 11. With the beam 3 focussed upon a diffuse area of the surface 11 the present optical alignment device is compatible with other expanded beam connectors.

The imaging element 9 may be made of glass and brought into intimate contact with the focus means 7. The imaging element 9 and focus means 7 may be secured using a matched refractive index epoxy glue. The image surface 11 may be roughened for example by grinding in order to more readily identify the light beam 3. The light conductor 15 may be secured to the image element 11 using an epoxy glue, this glue may also act to level the image surface 11 when ground. A sleeve or collar may be placed around the optical fibre to increase the area of contact with the image surface 11 so improving mechanical strength.

In Figures 2 to 6, a method of providing optical alignment between a light element, for example, a light source, and a light conductor, is illustrated.

With reference to Figure 2, an optical element 21 is secured in a flanged member 23 which can be connected to other associated devices and electrical connections. It will be noted that any angular or lateral mis-location of the optical element 21 may be compensated for in later stages of the present optical alignment method.

In Figure 3, an optical coupling device 25 as described with reference to Figure 1 is provided in association with the optical element 21. It will be appreciated that the focus means 7 and imaging element 9 are conveniently held within a tube 27. The relative positions of the optical element 21 and device 25 are adjusted until a pre-determined area of the image surface 11 is illuminated. An imaging system such as a television camera may be used.

Once the pre-determined area of the image surface 11 is illuminated the flanged member 23 and device 25 are secured relative to one another. One possible method of securing the flanged member 23 to the device 25 is illustrated in Figure 4, in which a bridging sleeve 29 is used. It will be noted that the bridging sleeve 29 can be welded or soldered to the flanged member 23 or tube 27. However, it is advantageous to ensure the optical element 21 is hermetically sealed.

In order to more accurately define the pre-determined area of the image surface 11 which is illuminated, that surface 11 may be ground to produce dispersion of the light focussed upon it thereby to make the image more visible.

Considering now Figure 5, with the light focussed by the focus means 7 upon the image surface 11, the light conductor 15 is then moved transversely across the image surface 11 in order to achieve the desired degree of optical coupling (i.e. alignment) between the optical element 21 and the light conductor 15. The light conductor 15 is then glued or secured in some other way in this position. A collar 35 may be added to give additional mechanical strength to the image surface 11/light conductor 15 interface.

Finally, as illustrated in Figure 6, a cover 33 may be secured to the bridging sleeve 29 in order to protect the image surface 11/light conductor 15 interface. The cover 33 may be filled with an elastomeric compound for additional protection.

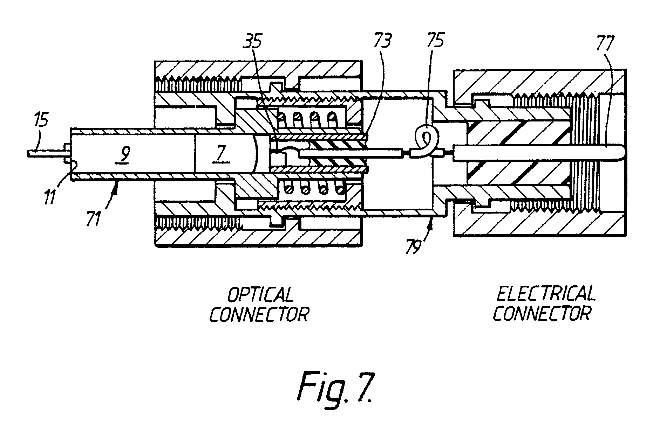

Figure 7 illustrates, in cross-section, the optical alignment device as illustrated in Figure 1 incorporated into an optical/electrical connector arrangement. The focus means 7 and imaging element 9 are secured in an optical connector housing 71. A light source 35 is mounted within a tube 73 that enters the housing 71. The source 35 is connected via electrical wire 75 to an electrical cable 77 extending from an electrical connector housing 79. The light source 35 provides a light beam which is coupled through the optical alignment device, constituted by the focus means 7 and image element 9, to the light conductor 15. However, it will be appreciated that instead of focusing light upon a point, the focus means 7 and imaging element 9 could provide a parallel beam upon the image surface 11 that may be coupled to an expanded beam connector.

It will be appreciated that the present optical alignment method and device illustrated in Figure 7 has high structural and temperature stability due to the concentric arrangement of the optical connector housing 71 and the electrical connector housing 79 and a solid interface between the focus means 7 and the imaging element 9.

It will be understood that optical coupling is achieved in the present invention by projecting a light beam upon a tangible image surface which will either be fixed initially or subsequently fixed. Once the light beam projection is fixed the position of a second light element (e. g. optical fibre) can be adjusted relative to it to ensure good optical coupling.

## Claims

1. A method of aligned optical coupling between light elements using light focus means and an image surface, the method comprising:-

(i) projection of a light beam from a first light element through the light focus means to be incident upon the image surface;

(ii) adjustment of the position of the image surface relative to the first light element such that the light beam is focussed upon a pre-determined area of that image surface; and,

(iii) positional adjustment of a second light element relative to the pre-determined area such that light is coupled through that area into the second light element.

2. A method as claimed in claim 1, wherein the image surface is secured relative to the first light element after adjustment of the image surface relative to the first light element.

3. A method as claimed in claim 2 or 3, wherein the pre-determined area is a point.

4. A method as claimed in claim 1 or 2, wherein the light beam is expanded by the focus means into a parallel beam.

5. A method of aligned optical coupling substantially as hereinbefore described with reference to the accompanying drawings.

6. An optical coupling arrangement for light element including light focus means for focusing light upon an image surface that is substantially fixed to illuminate a pre-determined area of that image surface, the pre-determined area of the image surface being arranged to allow light to be coupled through it.

7. An optical arrangement as claimed in claim 6 wherein the image surface is upon an image element and defines a focal plane of the focus means.

8. An optical arrangement as claimed in claim 7 wherein the image element and the focus means are arranged in intimate contact.

9. An optical arrangement as claimed in claim 7 or 8 wherein the image element is formed from glass or any other light transparent material.

10. An optical arrangement as claimed in any of claims 6 to 9 wherein the image surface is arranged to allow a light element to be secured to it.

11. An optical arrangement as claimed in claim 10 wherein the light element is an optical fibre, a waveguide or a light source.

12. An optical arrangement as claimed in any of claims 6 to 11 wherein the focus means is arranged to focus light upon a point upon the image surface.

13. An optical arrangement as claimed in any of claims 7 to 12 wherein the image surface is roughened.

14. An optical arrangement substantially as hereinbefore described with reference to the accompanying drawings.

Fig.1.

Fig.2.

Fig.3.

Fig.4.

Fig.5.

Fig.6.

EP 0 392 719 A2

OPTICAL
CONNECTOR

ELECTRICAL
CONNECTOR

*Fig. 7.*